# EUROPÄISCHE PATENTSCHRIFT

(11) **EP 0 754 542 B1**
(45) Veröffentlichungstag und Bekanntmachung des Hinweises auf die Patenterteilung: **23.04.2008**
(21) Anmeldenummer: 96110774.5
(22) Anmeldetag: 04.07.1996
(51) Int. Cl.: B32B 27/08, B32B 27/18, B32B 27/40, C09J 7/02

(54) **Trennschichtfreie Dublofolie, Verfahren zu ihrer Herstellung sowie ihre Verwendung**
Film without a release layer comprising at least two layers, process for the production thereof and use thereof
Film sans couche de décollage comportant au moins deux couches, son procédé de fabrication et son utilisation

(30) Priorität: 17.07.1995 DE 19525971
(43) Veröffentlichungstag der Anmeldung: 22.01.1997
(73) Patentinhaber: Epurex Films GmbH & Co. KG, 29656 Walsrode (DE)
(72) Erfinder: Hargarter, Nicole, Charlottsville VA 22903 (US); Schultze, Dirk, Dr., 29683 Fallingbostel (DE); Kunold, Reinhard, 29683 Fallingbostel (DE)
(74) Vertreter: Feldhues, Michael L.F.

(56) Entgegenhaltungen:
- EP-A- 0 002 465
- EP-A- 0 024 740
- EP-A- 0 603 680
- DE-A- 4 126 499
- GB-A- 1 446 586

## Beschreibung

Diese Erfindung betrifft elastische thermoplastische Dublofolien, die aus mindestens einer höherschmelzenden und mindestens einer niedrigschmelzenden, warmklebrigen Schicht bestehen, wobei die unter 100°C erweichende warmklebrige Schicht durch Additive derart modifiziert wird, daß sie ohne zusätzliche Trennschicht herstellbar ist, nicht auf dem Wickel verblockt und trotzdem ihre Warmklebrigkeit als notwendige Eigensch für ihren erfindungsgemäßen Einsatz erhalten bleibt. Mindestens eine höherschmelzende Schicht besteht aus thermoplastischen Polyurethanen.

Kunststoff-Folien sind in vielen Variationen bekannt. Eine spezielle Ausführungsform sind die Schmelzklebefolien. Schmelzklebefolien, ihre Eigenschaften und X Vorteile sowie Verfahren zu ihrer Herstellung aus den gängigen Haftschmelzklebstoffgranulaten oder Pulvern sind beispielsweise in der US 4,379,117 (Grace) oder der DE 2 114 065 (Plate Bonn) beschrieben. Der Einsatz von Schmelzklebefolien ist exemplarisch in der DE 3 911 613 (Audi) beschrieben. Eine generelle Kategorisierung von Klebstoffen läßt sich beispielsweise bei Habenicht: Kleben, Springer Verlag, Berlin 1986, nachlesen. Schmelzklebefolien sind in Ausführungsformen als beidseitig klebefähige Folien aber auch als nur einseitig klebefähige Dublofolien bekannt.

Als nach dem Stand der Technik bekannte Dublofolien werden Folien bezeichnet, die aus mindestens einer warmklebrigen, niedrig erweichenden Schicht eines Polymerharzes und mindestens einer höher erweichenden Schicht eines zweiten Polymerharzes bestehen. Folienaufbauten, die aus mindestens einer niedrig erweichenden und einer höher erweichenden Schicht bestehen, sind aus dem Bereich der Verpackung, insbesondere der Lebensmittelverpackung, bekannt. Die dort eingesetzten Folien sind meist aus Polyolefinen, die nur eine geringe Warmklebrigkeit besitzen, hergestellt. Im Unterschied zum Einsatz von Dublofolien, bei dem eine Verbindung einer einseitig klebenden Folie mit einem i.a. nicht klebenden Substrat erfolgt, werden bei der Verwendung siegelfähiger Verpackungen zwei Siegelschichten miteinander verschweißt

Dublofolien unterscheiden sich damit von Haftklebefilmen, aufgebaut aus Trägerschichten, die mit reinem Haftklebstoff beschichtet sind, wie sie bespielsweise in der WO 92/22619 (Minnesota Mining and Manufacturing Company) beschrieben sind. Diese bieten eine zu geringe Klebkraft nicht nur bei erhöhten Temperaturen und können zudem zu leicht von dem Substrat abgelöst werden.

Bekannte Anwendungsgebiete für Dublofolien sind die Verhautungen von porösen Gebilden wie beispielsweise Schaumstoffen, Webwaren und Vliesen. Diese Verhautung dient i.a. der Herstellung einer glatten Oberfläche und damit dem Schutz gegen das Eindringen oder Durchtreten von Fluiden, meistens dem Schutz vor Wasser. So lassen sich Schaumsysteme durch Verhautung u.a. vor Verrottung schützen. Ferner können so verhautete Gebilde einfach bedruckt oder lackiert werden, was bei porösen Oberflächen nur schwer möglich ist.

Für technische Anwendungen sind die Eigenschaften der weit verbreiteten und preiswerten Polyolefine oft nicht ausreichend, so daß auf Dublofolien aus technischen Thermoplasten wie Polyamiden, Polyestern oder auch Kombinationen aus ihnen zurückgegriffen werden muß. Dies ist insbesondere dann der Fall, wenn Substrate mit polaren Oberflächen abgedeckt werden sollen oder wenn neben den adhäsiven Klebstoffeigenschaften auch die kohäsiven Werkstoffcharakteristika des Klebers von entscheidender Bedeutung sind. Sollen die Dublofolien zudem noch elastische Eigenschaften besitzen, wird für die im höheren Temperaturbereich erweichende Schicht gerne auf Polymerharze aus der Gruppe der thermoplastischen Polyurethane (TPU) zurückgegriffen. Aus dieser Gruppe sind sowohl niedrig erweichende Typen, sogenannte Hotmelts, als auch höher erweichende Standard-Typen bekannt.

Für die bekannten elastischen Dublofolien aus thermoplastischen Materialien werden als höher erweichende Schicht gerne TPU eingesetzt, die ein breites Spektrum relevanter Eigenschaften wie eine hohe Abriebfestigkeit und hohe Reißfestigkeit bei zugleich hoher Reißdehnung und gutem Rückstellvermögen bieten. Als höher erweichende Schicht von Dublofolien eignen sich prinzipiell die am Markt erhältlichen TPU, insbesondere die TPU die bereits heute für einschichtige Folien eingesetzt werden bzw die auf ihnen basierenden Rohstoffrezepturen.

Einschichtige Folien aus höher erweichenden TPU, Verfahren zu ihrer Herstellung sowie ihre Verwendung sind nach dem Stand der Technik beispielsweise aus der EP 0 308 683 (BF Goodrich), der EP 0 526 858 (Elf Atochem), der EP 0 571 868 (Wolff Walsrode) oder der EP 0 603 680 (Wolff Walsrode) bekannt. Die in diesen Schriften beschriebenen Aufbauten lassen sich als höherschmelzende Schicht bzw. Schichten in Dublofolien integrieren oder sind bereits in die nach ihrer Art bekannten Dublofolien integriert worden. Ebenso ist die Herstellung von TPU-Folien unter Einsatz von im wesentlichen unverträglichen Polymeren als Mattierungsmittel in TPU-Elastomeren z.B. in der DE 41 26 499 (Elastogran) beschrieben.

Dublofolien für technische Anwendungen weisen bevorzugt eine einseitig höhere Warmklebrigkeit auf. Ihre Verbundhaftung ist zudem meist auf das Substrat, gegen das sie geklebt werden sollen, speziell zugeschnitten. Die Schmelzklebeschicht der Dublofolie wird bevorzugt aus der gleichen Materialklasse wie das Substrat gewählt. Für technische Anwendungen wird für die Auswahl der Rohstoffe für die Schmelzklebeschicht deshalb bevorzugt auf die Rohstoffgruppe umfassend die Klassen der thermoplastischen Polyamide, Polyester und Polyurethane zurückgegriffen. Bei diesen Hotmelt-Einstellungen handelt es sich üblicherweise nicht um Homopolymere sondern um Copolymere. Durch Copolymerisation lassen sich entscheidende Werkstoffeigenschaften wie Schmelzpunkt, Erweichungspunkt, Kristallisationsverhalten und E-Modul beeinflussen. Aus den genannten Klassen sind jeweils elastischere und steifere Einstellungen bekannt.

Die nach dem Stand der Technik angebotenen Schmelzkleberohstoffe, die für die Folienfertigung zur Verfügung stehen, werden üblicherweise als Granulate oder Pulver angeboten. Da sie oftmals auch als Rohstoffe für die Rezeptierung vernetzender Kleber eingesetzt werden, weisen sie vorzugsweise HydroxylEndgruppen auf. Liegt der Erweichungsbereich der niedrig erweichenden Schicht auf der Koflerbank deutlich über 100°C, so ist es durch gezielte Abkühlung der niedrig schmelzenden Schicht möglich, sie ohne zusätzliche Trennschicht herzustellen. Solche Folien aus Polyamid sind beispielsweise in der US 3,762,986 (Allied Chemical Corporation) beschrieben. Entsprechende Folien mit einer Schicht aus Copolyamid und einer Schicht aus TPU sind in der EP 0 382 236 (BF Goodrich) beschrieben.

Vielfach besteht jedoch die Anforderung, die Schmelzklebe- oder Siegelrohmaterialien für die niedriger erweichende Schicht so auszuwählen, daß sie einen vergleichsweise niedrigen Erweichungsbereich von unter 100°C haben, damit sie bei der Verarbeitung das zu kaschierende oder zu verhautende Material nicht schädigen. Eine solche Anforderung ist beispielsweise für das Verhauten von Schaumkunststoffen gängig. Für diese Anwendung sind deshalb Schmelzklebstoffe mit Erweichungsbereichen auf der Koflerbank von unter 100 °C üblich. Die Schmelzpunkte bzw. -bereichsmaxima der niedrigst erweichenden marktgängigen Klebrohstoffe liegen um 50°C, gemessen nach DIN 53 736. Aufgrund der bei Kunststoffen üblichen Molekulargewichts- und Kristallitgrößenverteilungen erstreckt sich das Aufschmelzen bzw. Erweichen eines solchen Materials über einen breiteren Temperaturbereich von oft bis zu 20°C, was bedingt, das diese Materialien auch bei wärmeren Umgebungstemperaturen bereits eine merkliche Klebneigung bzw. Blockneigung besitzen können und somit oft als permanent klebrig einzustufen sind.

Sollen Dublofolien mit einer Schicht aus sehr niedrig erweichenden Polymerharzen hergestellt werden, so ist oftmals eine Trennschicht zur Führung auf den Walzen bei der Herstellung und/oder zur Verhinderung des Verblockens auf dem Wickel notwendig, da derartige dauerhaft klebende Materialien zur Folge haben, daß eine Bahn, die einseitig mit einer solchen Kleberschicht überzogen und zu einer Rolle, bzw. einem Wickel oder einem Ballen aufgewickelt ist, sich nicht mehr von der Rolle abziehen läßt, weil die Vorderseite mit der Rückseite verklebt Um die Verarbeitbarkeit einer solchen Rolle zu beeinträchtigen muß nicht unbedingt eine dauerfeste Verklebung auf dem Winkel erfolgen. Bereits geringfügige Erhöhungen der zum Abziehen notwendigen Kraft können bei elastischen Materialen wie den TPU dazu führen, daß sie so stark unter Bahnzug verformt werden, daß sie nicht mehr sicher verarbeitet werden können.

Daher sind bei den nach dem Stand der Technik bekannten elastischen Dublofolien, um den geschilderten Nachteil zu beheben, die freien Oberflächen der Kleberschicht mit Abdeck- oder Trennbahnen versehen, die vor dem Verarbeiten der Bahn bzw. dem Verkleben mit einem Substrat leicht wieder entfernt werden können. Unter dem Begriff der Abdeck- oder Trennschicht wird nach dem Stand der Technik eine Bahn verstanden, die mindestens eine der beiden Seiten der nach dem Stand der Technik bekannten Dublofolien abdeckt, und mit der Dublofolie aufgewickelt wird, um dabei ein Verkleben oder Verblocken der einzelnen Rollenlagen auf dem Wickel zu verhindern. Beim Abziehen der Dublofolie von der Rolle verbleibt die Trennschicht auf einer Seite der Dublofolie, muß aber vor dem bestimmungsgemäßen Einsatz der Dublofolie von dieser abgetrennt werden.

Sollen Dublofolien hergestellt werden, die mit einer unter 100°C erweichenden Siegel- oder Hotmeltschicht ausgerüstet sind, so ist nach dem Stand der Technik immer mindestens eine Trennschicht notwendig, um ein Verblocken auf dem Wickel sicher zu vermeiden. Derartige Aufbauten aus TPU sind z.B. in der DE 1 964 059 (Kalle) beschrieben. Weitere Verfahren zur Herstellung derartiger Folien beschreiben die JA 61 086 262 (Toppan Printing), die EP 0 002 465 (Bayer) oder die EP 0 024 740 (Plate Bonn). Letztgenannte Schrift beschreibt sogar die Möglichkeit, die Dublofolie beidseitig mit einer Trenn- oder Schutzfolie zu versehen.

Als Trennschichten für Dublofolien mit mindestens einer Schicht aus der Gruppe der o.g. technischen Thermoplaste, die Polyamide, Polyester und TPU beinhaltet, können im einfachsten Fall Polyethylenfolien eingesetzt werden, die beispielsweise bereits ohne Silikonisierung an Polyurethanen-, Copolyamid- und Copolyester-Haftschmelzklebefolien nicht dauerfest haften und damit ohne weitere Behandlung abgezogen werden können. Trennschichten nach dem Stand der Technik können auch aus mit Silikon oder anderen gängigen Antihaftmaterialien, wie beispielsweise Polytetrafluorethylen, ausgerüsteten Papieren, Folien oder sonstigen Bahnmaterialien bestehen.

Die Trennschichtmaterialien bedingen eine eigene Herstellung, dadurch verteuern sie die angebotenen Dublofolien. Zudem sind sie vom Verarbeiter meist unerwünscht, da dieser die Trennschicht separat abwickeln und vielfach entsorgen muß. Sie tragen somit dazu bei, den Einsatz von Dublofolien teuer zu machen und stellen eine zusätzliche ökologische Belastung dar.

Durch den stumpfen, wenig gleitfreudigen Charakter der glatten Oberflächen der niedrig erweichenden Schicht von Dublofolien müssen bei der Herstellung und (Weiter-) Verarbeitung verschiedene Vorkehrungen getroffen werden, um ein zügiges und problemloses Führen der Folienbahnen bei der Herstellung, Anwendung oder Konfektionierung zu ermöglichen. Problematisch stellt sich bei der Verwendung von stumpfen Folien die Ausbildung von Falten dar, die unter Bahnzug entstehen und vor dem Aufrollen auf den Wickel oder dem Kontakt mit dem Substrat geglättet werden müssen. Hierzu kommen u.a. der Einsatz beschichteter Walzen und die über das übliche Maß hinausgehende Verwendung von Breitstreckwalzen in Betracht. In diesem Zusammenhang besteht das dringende Interesse insbesondere des Verarbeiters an einer vereinfachten und somit preiswerteren Bahnführung.

Alternativ zur Verwendung von Trennschichtmaterialien ist zudem das Ausrüsten von klebrigen oder blockigen Materialien mit Gleitmitteln derart bekannt, daß ein Gleiten auf den Maschinen erreicht und ein Verblocken auf dem Wickel verhindert wird. Mit der Verwendung solcher Materialien in der niedriger erweichenden Schicht der Dublofolie werden die adhäsiven Eigenschaften dieser Schicht modifiziert. Die hierfür bekannten Systeme haben den Nachteil, daß sie durch die Belegung der Oberflächen die Kleb- oder Siegelfähigkeit und -festigkeit derart verändern, daß sie auch durch eine Anpassung der Verarbeitungsparameter wie Temperatur, Druck und Zeit nicht das Ausgangsniveau des nicht ausgerüsteten Materials erreichen. Solche Gleit-, Slip- oder Antihaftsysteme sind beispielsweise von Brotz im Taschenbuch der Kunststoff-Additive, Gächter, Müller (Hrsg.), 2. Ausgabe, Hanser Verlag, München 1983, beschrieben.

Ebenso bekannt ist das Aufprägen feiner Strukturen auf eine Folienseite, so daß die Kontaktfläche von Vorder- und Rückseite der Dublofolie minimiert wird. Hierbei ist nach dem Stand der Technik aber in mindestens einer Schicht die Zugabe eines geringen Wachsanteils notwendig, um das Verblocken sicher zu verhindern. Durch die Migration des Wachses an die Folienoberfläche tritt auch hier die unerwünschte Verminderung der adhäsiven Klebeeigenschaften auf.

Der vorliegenden Erfindung liegt nun die Aufgabenstellung zugrunde, eine zum Verhauten von porösen Materialien geeignete Dublofolie bereitzustellen, die ohne Trennschicht auf der höherschmelzenden oder niedrigerschmelzenden Seite gelagert werden kann, ohne dabei auf dem Wickel zu verblocken und ohne, daß ihre Warmklebeeigenschaften verlorengehen. Sie soll sich zudem leichter als die nach dem Stand der Technik bekannten Dublofolien über die gebräuchlichen Maschinen führen lassen. Zudem sollen sie sich bei den für die bekannten Dublofolien üblichen Bedingungen verarbeiten lassen. Hierzu zählen insbesondere die Verarbeitung auf Thermokaschierkalandern ebenso wie die Verarbeitung auf Flachbett-Thermokaschieranlagen und die Verbindung aktivierter Dublofolien mit Substraten in einem der Aktivierungsstation nachgeschalteten Presswerk

Erfindungsgemäß gelang es, eine den genannten Anforderungen genügende Dublofolie bereitzustellen, die dadurch gekennzeichnet ist, daß die Folie aus mindestens einer höherschmelzenden Schicht aus TPU, wobei ihr Erweichungsbereich auf der Koflerbank über 100°C liegt und der Mittelwert des Erweichungsbereiches mindestens 15°C über dem der niedriger erweichenden Schicht liegt, und einer niedriger erweichenden Schicht aus einem unter 100°C auf der Koflerbank erweichenden Hotmelt-Material aus den Substanzklassen der thermoplastischen Polyamide, Polyester und/oder Polyurethane mit mindestens einer Minoritätskomponente aus einer der nachfolgend genannten Substanzklassen besteht. Die Minoritätskomponenten kommen erfindungsgemäß aus Klassen der Polymerharz-basierenden Additivkonzentrate enthaltend Wirkstoffkomponenten umfassend
a) anorganische Partikel
b) organische Partikel,
wobei die Partikel eine mittlere Teilchengröße kleiner als 15 µm aufweisen.

Die höherschmelzende Schicht aus TPU entspricht hinsichtlich ihrer Rezepturbestandteile den nach dem Stand der Technik bekannten Folien aus TPU.

In einer besonders bevorzugten Ausführungsform enthalten die erfindungsgemäßen Folien als Matrixkomponente der Additivkonzentrate thermoplastische Polyurethane, die mindestens 15°C oberhalb der niedrigerschmelzenden Polyurethan-Hotmelt-Komponente aufschmelzen.

In einer weiteren Ausführungsform können in den erfindungsgemäßen Folien Polyethylene als Matrixkomponenten der zur niedriger erweichenden Schicht zugesetzten Additivkonzentrate verwendet werden. Besonders bevorzugt sind Hochdruck-Polyethylene, auch als Low-Density-Polyethylene bekannt.

Erfindungsgemäß geeignet sind Partikel mit einer mittleren Teilchengröße kleiner als 15 µm, die in den der niedriger erweichenden Schicht zugegebenen Additivkonzentraten enthalten sind. Zur Ermittlung der Teilchendurchmesser eignet sich vorteilhafterweise die Siebanalyse, beispielsweise nach DIN 53 477. Besonders geeignet sind SiO₂ oder Styrol-Polymerisate enthaltendende Partikel.

Zwischen der höher erweichenden Schicht aus TPU und der niedriger erweichenden Schicht aus Hotmelt-Material der o.g. Substanzklassen können ggf. weitere Schichten aus thermoplastischen Harzen eingebettet sein.

Die der Matrixkomponente der niedriger erweichenden Schicht zugesetzte Minoritätskomponente zeichnet sich dadurch aus, dass sie die Oberfläche der niedriger erweichenden Schicht in keinem Fall vollflächig belegt, was die Klebeeigenschaften beeinträchtigen würde. Die erfindungsgemäß geeigneten Minoritätskomponenten besitzen eine Wirkungsweise, die darauf beruht, daß sie während der Folienherstellung lokal erhabene Bereiche oder Domänen in der Oberfläche der niedriger erweichenden Schicht der erfindungsgemäßen Dublofolie erzeugen. Die erfindungsgemäß geeigneten Minoritätskomponenten erweichen bzw. schmelzen und kristallisieren bzw. erstarren bei höheren Temperaturen als die für die niedriger erweichende Schicht der erfindungsgemäßen Dublofolie geeigneten Matrixkomponenten. Kristallisation bzw. Erstarrung erfolgen zudem schneller als bei der Matrixkomponente. Die erhabenen Bereiche können somit im abgekühlten Zustand der Schmelzklebefolie als Abstandshalter zwischen zwei Folienlagen auf dem Wickel wirken. Derart wird ein Verblocken zwischen der höher schmelzenden Rückseite der Dublofolie einer Folienlage und der niedriger schmelzenden Vorderseite der Dublofolie der nächsten Folienlage im Wickelkontakt verhindert. Zudem ermöglichen die erhabenen Bereiche ein ausgezeichnetes Gleiten über die Verarbeitungs- und Konfektioniermaschinen, so daß möglicherweise entstehende Falten geglättet werden können und die Folienwickel eine hervorragende Gleichmäßigkeit erhalten.

In einer bevorzugten Ausführungsform beträgt der Anteil der Minoritätskomponenten zwischen 5 Gew.-% und 40 Gew.-% an der Gesamtmasse der niedrig erweichenden Schicht. Für eine besonders bevorzugte Ausführungsform liegt der Anteil der Minoritätskomponente an der Gesamtmasse der niedrig erweichenden Schicht zwischen 10 Gew.-% und 20 Gew.-%.

Als Ausgangsmaterialien für die Matrixkomponente der niedriger schmelzenden bzw. niedriger erweichenden Schicht sind die entsprechenden gängigen thermoplastischen Haftschmelzklebstoffe der am Markt bekannten Anbieter geeignet. Haftschmelzklebstoffe aus den erfindungsgemäß geeigneten Substanzklassen werden beispielsweise unter den Handelsnamen Cepatex, Desmocoll, Dynapol, Estane, Griltex, Iromelt, Irostic, Platamid und Vestamelt angeboten. Die erfindungsgemäß eingesetzten Schmelzkleberohstoffe sind vorzugsweise hydroxylterminiert. Die Schmelzkleberohstoffe aus den Substanzklassen der thermoplastischen Polyamide, Polyester und oder Polyurethane werden in steiferen und leichter verformbaren Einstellungen angeboten. Erfindungsgemäß bevorzugt sind die jeweils leichter verformbaren Einstellungen, charakterisiert durch den geringeren Elastizitätsmodul.

Die Viskosität der als Matrixmaterialien der niedriger erweichenden Schicht geeigneten Substanzen wird günstigerweise durch den Schmelzflußindex (MFR) beschrieben. Die Schmelzflußindices für die Matrixkomponente der niedriger erweichenden Schicht der erfindungsgemäßen Dublofolie liegen bevorzugterweise zwischen 1,5 g/10 min und 150 g/10 min, gemessen nach DIN 53 735 bei 160°C und einer Prüfmasse von 2,16 kg.

Für die höher schmelzende bzw. höher erweichende Schicht aus elastischem TPU kommen erfindungsgemäß die Materialien zum Einsatz, die heute als Rohstoffe für die nach dem Stand der Technik bekannten einschichtigen TPU-Folien, wie sie beispielsweise unter den Handelsnamen Dureflex, Platilon, Tuftane und Walopur am Markt erhältlich sind, verwendet werden, wobei ihr Erweichungsbereich auf der Koflerbank über 100°C und mindestens 15 °C über dem der niedriger erweichenden Schicht liegt. Geeignete TPU werden beispielsweise unter den Handelsnamen Desmopan, Elastollan, Estane, Irogran, Pellethane, Morthane, Tecoflex, Texin und Uceflex angeboten.

Um die erfindungsgemaße Eignung der der niedriger erweichenden Schicht zugesetzten Minoritätskomponente zu belegen, lassen sich die geringen Reibungszahlen, gemessen nach DIN 53 375 und die geringen Blockwerte, gemessen nach DIN 53 366 bei 50 °C, anführen.

Erfindungsgemäß bevorzugt sind Dublofolien mit einer Gesamtdicke zwischen 30 µm und 200 µm. Die Dicke der höherschmelzenden Schicht wird so gewählt, daß sie bei Wärmeeintrag unter Verarbeitungsbedingungen nicht wesentlich erweichen wird. Ihre Dicke liegt geeigneterweise zwischen 10 µm und 150 µm. Die Dicke der niedriger erweichenden Schicht wird in Abhängigkeit des zu bedeckenden Substates so gewählt, daß eine optimale Verklebung erreicht wird. Für stark poröse Substrate wird i.a. eine dickere niedrig erweichende Schicht gewählt, damit auch bei ungleichmäßiger Oberfläche des Substrates und dadurch bedingtem teilweisen Wegfließen der Schmelzklebstoffschicht eine möglichst große Verklebungsfläche geschaffen wird. Bei glatten Substraten genügt dagegen eine geringere Schmelzklebeschichtdicke. Deshalb ist auch für die niedriger erweichende Schicht ein Dickenbereich zwischen 10 µm und 150 µm erfindungsgemäß geeignet.

Zur Herstellung der erfindungsgemäßen Dublofolie eignen sich besonders die gängigen thermischen Umformverfahren zur Verarbeitung von Kunststoffen zu mehrschichtigen Flächengebilden. Hier wären die Herstellung durch Coextrusion zu nennen, die nach dem Flachfolienverfahren z.B. mit Gießwalze oder Abzugskalander oder nach dem Blasfolienverfahren erfolgen kann. Ebenso geeignet zur Herstellung erfindungsgemäßer Dublofolien ist die Beschichtung einer einlagig hergestellten Folie mit einer zweiten Schicht. Auch das Transferbeschichtungsverfahren, bei dem die Schmelzefahne einer Schicht zunächst auf einen Träger beschichtet wird und anschließend die Anbindung an die einzeln hergestellte oder ebenfalls auf einen Träger beschichtete zweite Folie oder Schmelzefahne in einem Kalander oder sonstigen Preßwerkzeug erfolgt. Die Dublierung zweier einschichtiger, möglicherweise mit einem Träger hergestellter, Folien ist ebenfalls geeignet. Aufgrund der besseren erzielbaren Verbundhaftung ist die Coextrusion unter den genannten Herstellungsverfahren besonders bevorzugt.

Die erfindungsgemäße Dublofolie eignet sich zum Abdichten poröser Materialien ebenso wie zur Ausstattung von Gegenständen mit einer Oberfläche aus TPU. Hierbei wird durch die außerordentlichen Eigenschaften der TPU eine Aufwertung hinsichtlich der Oberflächengüte in Bezug auf die Abrieb- und Kratzbeständigkeit erreicht.

In einer bevorzugten Anwendung wird die erfindungsgemäße Folie gegen poröse Substrate geklebt. Hierzu wird derart verfahren, daß zur Kaschierung oder Abdichtung von porösen Substraten, insbesondere Schaumkunststoffen, textilen Materialien, Nähten, Vliesstoffen, Leder und/oder Spaltleder mit der erfindungsgemäßen Dublofolie, die niedriger erweichende Seite der Folie auf oder über ihren Erweichungsbereich erwärmt wird und die mehrschichtige Folie mit dem Substrat in Verbindung gebracht und ggf. unter Anwendung zusätzlichen Druckes verklebt wird, wobei die erweichte Seite mit dem niedrigeren Erweichungsbereich dem Substrat zugewandt ist.

Der Wärmeeintrag in die Schicht mit niedrigerem Erweichungsbereich kann beispielsweise durch Warmluft, Thermostrahler und/oder beheizte Walzen erfolgen. Dies kann direkt in die niedriger erweichende Schicht oder durch die höher erweichende Schicht hindurch erfolgen. Erfindungsgemäß bevorzugt ist der Wärmeeintrag direkt in die niedriger erweichende Schicht. Vor der Verwendung der erfindungsgemäßen Folie kann diese einer thermischen Voraktivierung unterzogen werden.

Die Abdichtung mit den erfindungsgemäßen Dublofolien kann durch Thermokaschierung erfolgen, wobei keine störenden oder überflüssigen Trennschichten gehandhabt werden müssen. Die Thermokaschierung wird durch den Wegfall der Trennschicht ökonomisch gegenüber Dublofolien mit Trennschicht begünstigt, so daß neben den ökologischen Vorteilen gegenüber der Flammkaschierung durch den Wegfall des Abbrandes ein weiterer Anreiz zum Einsatz der Thermokaschierung geboten wird. Die Thermokaschierung mit Dublofolien bietet zudem eine durch eine andere Technologie und den mehrschichtigen Aufbau bedingte erhöhte Verarbeitungssicherheit gegenüber der Bildung von Löchern oder Pinholes, die bei der Flammkaschierung durch Durchbrenner hervorgerufen werden, so daß verminderte Schichtdicken realisierbar werden. Letztere stellen einen weiteren ökonomischen und ökologischen Vorteil der erfindungsgemäßen Dublofolie dar.

Eine ebenso bevorzugte Verwendung ist der Einsatz zur Nahtabdichtung vernähter, abgesehen von den Nähten in der Fläche bereits abgedichteter Gebilde, insbesondere von Folien-kaschierten Textilien, Textil/Vlies- und/oder Textil/Schaum-Verbunden. Die genannten Folien-kaschierten Aufbauten können sowohl durch Flamm- oder Thermokaschierung hergestellt worden sein. Durch Vernähung verknüpfte Aufbauten können sowohl durch den Einsatz erfindungsgemäßer Dublofolien gegen den Durchtritt von Fluiden im Bereich der Nähte geschützt werden. Zur Abdichtung von Nähten werden bevorzugt schmale Streifen der erfindungsgemäßen Dublofolien, sogenannte Tapes, eingesetzt. Die Breite von Tapes liegt bevorzugterweise zwischen 20 mm und 50 mm.

Die Nähte der o.g. Aufbauten können, in Abhängigkeit von der Gestaltung der Naht, von den erfindungsgemäßen Dublofolien umschlossen oder lediglich abgedeckt werden. Bei der Nahtabdichtung erfolgt die Verklebung der niedriger schmelzenden Seite der Dublofolie üblicherweise auf die Folien-kaschierte Seite der o.g. Aufbauten. Im Bereich der Nahtüberkreuzungen erfolgt die Abdichtung der die zuerst abgedichte Naht kreuzenden zweiten Naht auch über die Verklebung der niedriger schmelzenden Seite der Dublofolie für die zweite Naht mit der höherschmelzenden Seite der für die Abdichtung der ersten Naht eingesetzten Folie.

Die erfindungsgemäßen Folien können mit den bekannten physikalischen und chemischen Behandlungsmethoden wie beispielsweise der Corona-Behandlung ein- oder beidseitig in ihren Oberflächeneigenschaften modifiziert werden.

Die im Rahmen der nachfolgenden Beispiele und Vergleichsbeispiele beschriebenen Folien wurden durch Blasfoliencoextrusion hergestellt. Die zum Aufschluß thermoplastischer Harze geeigneten Schneckenwerkzeuge sind in ihrem Aufbau z.B. von Wortberg, Mahlke und Effen in: Kunststoffe, 84 (1994) 1131-1138, von Pearson in: Mechanics of Polymer Processing, Elsevier Publishers, New York, 1985 oder der Fa. Davis-Standard in: Paper, Film & Foil Converter 64 (1990) S. 84 - 90 beschrieben. Werkzeuge zum Ausformen der Schmelze zu Folien sind u.a. von Michaeli in: Extrusions-Werkzeuge, Hanser Verlag, München 1991 erläutert.

### Beispiele

### Beispiel A

Mit Hilfe eines Zweischicht-Blasfolienwerkzeuges wurde eine Folie hergestellt, deren höherschmelzende Schicht aus einem handelsüblichen Ester-TPU der Shore-A-Härte 93 gebildet wurde. Dieser 50 µm dicken Schicht wurden die üblichen Additive wie Abstandshalter und Wachse zugesetzt. Sämtliche für diese Schicht eingesetzten Komponenten wurden gemeinsam in einem Extruder aufgeschmolzen.

Die niedriger erweichende Schicht wurde aus einem TPU-Hotmelt-Material gebildet, dem 10 Gew.-% eines SiO₂-enthaltenden Masterbatches auf Basis eines handelsüblichen Ester-TPU der Shore-A-Härte 86 zugegeben wurden. Das Additivkonzentrat hatte einen SiO₂-Anteil von ca. 50 Gew.-%. Die mittlere SiO₂-Partikelgröße war kleiner 6 µm. Die für die Ausbildung dieser 25 µm dicken, niedriger erweichenden Schicht benötigten Komponenten wurden mit einem weiteren Extruder plastifiziert.

Die beiden Schmelzeströme wurden in einem Zweischicht-Blasfolienkopf übereinandergelegt und aus diesem ausgetragen. Durch Anblasen mit Luft wurde die ringförmige Schmelzefahne abgekühlt, anschließend flachgelegt, im Randbereich beschnitten, so daß zwei Folienbahnen getrennt werden konnten. Diese wurden auf separaten Wickeleinrichtungen aufgerollt.

### Beispiel B

Eine zweischichtige Folie wurde analog zu dem in Beispiel A beschriebenen Aufbau hergestellt. Der niedriger erweichenden Schicht wurde jedoch ein Additivkonzentrat enthaltend Polystyrol-Teilchen in einer Matrix aus Ether-TPU der Shore-A-Härte 87 zugesetzt. Der zugegebene Anteil dieses Additiv-Batches betrug 10 Gew.-%, bezogen auf die Masse der niedriger erweichenden Schicht. Der Anteil an Polystyrol im Masterbatch betrug unter 50 Gew. %. Die mittlere Polystyrol-Teilchengröße war kleiner 10 µm.

### Beispiel C

Eine zweischichtige Folie wurde analog zu dem in Beispiel A beschriebenen Aufbau hergestellt. Der niedriger erweichenden Schicht wurden jedoch 10 Gew.-% eines Additivkonzentrates enthaltend SiO₂ in einer Matrix aus Hochdruck-Polyethylen zugesetzt.

Der Anteil an SiO₂ im Masterbatch betrug etwa 50 Gew.-%. Die mittlere Partikelgröße war kleiner 15 µm.

### Vergleichsbeispiel 1

Mit Hilfe eines Dreischicht-Blasfolienwerkzeuges wurde ein handelsüblicher Dublofolienaufbau hergestellt, dessen höherschmelzende TPU-Schicht aus einem handelsüblichen Ester-TPU der Shore-A-Härte 93 gebildet wurde. Dieser 50 µm dicken Schicht wurden die üblichen Additive wie Abstandshalter und Wachse zugesetzt. Sämtliche für diese Schicht eingesetzten Komponenten wurden gemeinsam in einem Extruder aufgeschmolzen.

Die 25 µm dicke, niedriger erweichende Schicht wurde aus einem TPU-Hotmelt-Material gebildet. Die für die Ausbildung dieser niedriger erweichenden Schicht benötigten Komponenten wurde mit einem weiteren Extruder plastifiziert.

Um ein Verblocken der Folie auf dem Wickel zu verhindern, wurde in einem dritten Extruder Polyethylen als Trennschichtmaterial aufgeschmolzen und als 30 µm dicke Schicht ausgetragen.

Die drei Schmelzeströme wurden in einem Dreischicht-Blasfolienkopf übereinandergelegt und aus diesem ausgetragen. Durch Anblasen mit Luft wurde die ringförmige Schmelzefahne abgekühlt, anschließend flachgelegt, im Randbereich beschnitten, so daß zwei Folienbahnen getrennt werden konnten. Diese wurden auf separaten Wickeleinrichtungen aufgerollt.

Die für im Rahmen der Prüfungen untersuchten Muster wurde eine Woche nach Herstellung der dreischichtigen Folie die PE-Trennschicht in einem separaten Arbeitsgang abgewickelt

### Vergleichsbeispiel 2

Eine zweischichtige Folie wurde analog zu dem in Beispiel A beschriebenen Aufbau hergestellt. Der niedriger erweichenden Schicht wurde kein zusätzliches Additiv zugesetzt, so daß sie ausschließlich aus niedrig erweichendem TPU gebildet wurde. Diese Folie verblockte auf dem Wickel, d.h. ein Abrollen der Folienbahn war nur unter deutlich erhöhtem Kraftaufwand und unter Deformation der Folie möglich.

### Vergleichsbeispiel 3

Eine zweischichtige Folie wurde analog zu dem in Beispiel A beschriebenen Aufbau hergestellt. Der niedriger erweichenden Schicht wurde jedoch ein Additivkonzentrat zugesetzt, welches zusätzlich zu den SiO₂-Abstandshaltern auch noch Wachse und Gleitmittel enthielt. Der zugegebene Anteil dieses Additivs betrug 10 Gew.-%, bezogen auf die Masse der niedriger erweichenden Schicht. Der Anteil an SiO₂ im Masterbatch lag wie in Beispiel A bei ca. 50 Gew.-%. Die mittlere SiO₂-Partikelgröße war kleiner 6 µm.

Prüfungen an den im Rahmen der Beispiele und Vergleichsbeispiele hergestellten Mustern:

### Abwickelverhalten

Das Abwickelverhalten wurde an einer in eine Abwickeleinrichtung eingespannten Folienrolle durch manuelles Abrollen geprüft.

### Haft- und Gleitreibzahl

Haft- und Gleitreibungszahl der niedriger erweichenden Seite der im Rahmen der Beispiele und Vergleichsbeispiele hergestellten Folien wurden nach DIN 53 375 im Kontakt Folie/Metall bestimmt.

### Zugversuch

Der Zugversuch an den im Rahmen der Beispiele und Vergleichsbeispiele hergestellten Folien wurde nach DIN 53 455-7-5 durchgeführt. Die Prüfkörper wurden quer zur Laufrichtung aus der Folie geschnitten.

### Rauhtiefe

Die Rauhtiefe der niedriger erweichenden Folienseite wurde durch mechanische Abtastung mit einem Perthometer-Prüfgerät der Fa. Feinprüf-Perthen untersucht. Die angegebene Rauhtiefe entspricht der in der DIN 4768/1 gegebenen Definition.

### Normalblockwert

Der Normalblockwert wurde nach DIN 53 366 bei 50°C bestimmt

### Erweichungsbereich

Den angegebenen Werten für den Erweichungsbereich auf der Kofler-Heizbank liegt die im folgenden beschriebene Hausmethode zugrunde. Auf eine Kofler-Heizbank werden (Folien-) Stücke des zu untersuchenden Kunststoffs mit einer Grundfläche von mindestens 1mm² gelegt. Nachdem diese Stücke mindestens 60 sec auf der Kofler-Heizbank gelegen haben, wird mit einem Skalpell festgestellt, bei welcher Position der Heizbank sich die Kunststoff-Teststücke ohne Einwirkung einer großen Kraft von der Seite her plastisch verformen lassen. Die Position auf der Kofler-Heizbank wird dann mit der Temperatur korreliert. Die an verschiedenen Teststücken ermittelten Maximal- und Minimal-Werte geben das obere und untere Ende des Erweichungsbereiches an.

Die in der nachfolgenden Tabelle wiedergegebenen, die Folien hinsichtlich der erfindungsgemäßen Eigenschaften charakterisierenden Daten zeigen deutlich, daß die in den Beispielen beschriebenen erfindungsgemäßen Folien den im Rahmen der Vergleichsbeispiele dargestellten Dublofolien mit nicht ausgerüsteter niedrig erweichender Schicht gegenüber im Vorteil sind.

**Tabelle 1 Eigenschaften der im Rahmen der Beispiele und Vergleichsbeispiele hergestellten Folien**

| Eigenschaft | Bestimmungsmethode | Einheit | Beispiel A | Beispiel B | Beispiel C | Vergleichsbeispiel 1 *) | Vergleichsbeispiel 2 | Vergleichsbeispiel 3 |
|---|---|---|---|---|---|---|---|---|
| Abwickelbarkeit nach Lagerung nicht über 30°C | ./. | /. | leicht | leicht | leicht _ | leicht | unter starker Verformung, sehr schwer | leicht |
| Haftreibungszahl im Kontakt Folie /Metall | DIN 53 375 | ./. | 0,47 | 0,56 | 0,54 | 0,63 ./. | | 0,45 |
| Gleitreibungszahl im Kontakt Folie /Metall | DIN 53 375 | /. | 0,61 | 0,99 | 0,67 | 1,00 | ./ | 0,60 |
| maximale Rauhtiefe | DIN 4768/1 | µm | 2,3 | 1,4 | 2,3 | 0,4 | ./. | 2,3 |
| Erweichungsbereich Matrix-harz / niedriger schmelzende Seite | Koflerbank Hausmethode | °C | 74 - 78 | 74 - 78 | 74 - 78 | 74 - 78 | 74 - 78 | 74 - 78 |
| Erweichungsbereich / höher schmelzende Seite | Koflerbank Hausmethode | °C | 135 - 145 | 135 - 145 | 135 - 145 | 135 - 145 | 135 - 145 | 135 -145 |
| Reißdehnung | DIN 53 455-7-5 | % | 519 | 486 | 467 | 455 | ./. | 504 |
| Reißfestigkeit | DIN 53 455-7-5 | N/ mm² | 53 | 55 | 58 | 58 | ./ | 54 |
| Normalblockwert / 50°C | DIN 53 366 | N/ cm² | 0,73 | 0,88 | 0,58 | 1,46 | / | 0,66 |

| | | | | | | | | |
|---|---|---|---|---|---|---|---|---|
| *) nach einem Umwickel-Schritt unter Abtrennung der PE-Trennschicht | | | | | | | | |

Die Oberflächenrauhigkeit der Schmelzklebeschicht der erfindungsgemäßen Beispielfolien ist gegenüber der Vergleichsbeispielfolie 1 mehr als verdreifacht. Dies bedingt die Trennmittel-freie Wickelbarkeit, die sich für die Folie aus dem Vergleichsbeispiel 2 nicht erzielen lässt. Ebenso bedingt die höhere Oberflächenrauhigkeit ein besseres Gleitverhalten, charakterisiert durch niedrige Haft- und Gleitreibungszahlen für die im Rahmen der Beispiele hergestellten Folien.

Die dort bestimmten Werte liegen niedriger als die Werte, die an der Folie aus dem Vergleichsbeispiel 1 nach dem Abwickeln der PE-Trennschicht bestimmt wurden. Günstigere Werte wurden nur an der mit zusätzlichen Gleitmitteln ausgestatteten Folie aus Vergleichsbeispiel 3 bestimmt.

Die aus dem Zugversuch erhaltenen Werte, die innerhalb der für elastische Folien üblichen Schwankungsbreite liegen, belegen, dass durch die Zugabe der Additivkonzentrate keine Schädigung der mechanischen Eigenschaften der modifizierten Folien gegenüber der nicht ausgestatteten Vergleichsfolie 1 erfolgt.

Der gegenüber dem Vergleichsbeispiel geringere Normalblockwert der für die in den Beispielen A, B und C beschriebenen Folien bestimmt wurde, belegt in eindrucksvoller Weise die erfindungsgemäße Wirkung der erfindungsgemäßen Additive: während die nicht ausgerüstete niedrigerweichende Seite der Folie aus dem Vergleichsbeispiel 1 bereits bei 50 °C beginnt eine merkliche Blockneigung zu zeigen, ist diese bei den im Rahmen der Beispiele hergestellten Folien noch nicht gegeben.

Zur Beurteilung der Verbundfestigkeit, insbesondere des adhäsiven Anteils der Laminatfestigkeit, wurden die niedriger erweichenden Seiten der in den Beispielen und Vergleichsbeispielen beschriebenen Dublofolien gegen die Coronavorbehandelte Seite einer handelsüblichen TPU-Einschichtfolie des Typs Walopur 2102 AK, 50 µm kaschiert. Die Kaschierung zwischen zwei beheizten Walzen erfolgte mit einer Paperplast Thermokaschiermaschine des Typs "Jolly". Die aus einer hart/weich-Paarung bestehende Kaschierwalzenstation mit 400 mm Breite wurde auf eine Temperatur von 126 °C geheizt. Der Anpressdruck der Walzen lag bei 100 bar. Um die TPU-Folien spannungsfrei bei der Vortriebsgeschwindigkeit von 2 m/min zu handhaben, wurden diese zwischen zwei orientierte Propylenfolien des Typs Walothen C 20 SE gelegt. Es tritt bei der Kaschierung keine Verbindung zwischen TPU- bzw. Dublofolie und der Polypropylenfolie ein. Um zwei Einspannenden für die charakterisierenden Schälversuche bereitzustellen, wurde an einer Seite des beschriebenen Aufbaus zwischen die Dublofolie und die einschichtige TPU-Folie ein weiterer Streifen des oben genannten Propylen-Folienmaterials als Trennschicht gelegt.

Aus den erzeugten Laminaten TPU-Einschichtfolie/Dublofolie wurden Prüfstreifen der Abmessung 210 x 15 mm geschnitten und mit einer Universal-Zugprüfmaschine der Fa. Frank die maximal auftretende Schälkraft ermittelt.

Zur weiteren Untersuchung der Verklebungseigenschaften der im Rahmen der Beispiele und Vergleichsbeispiele hergestellten Folien wurden diese auf einer Nahtabdichtungsmaschine der Fa. Ardmel in Standard-Ausführung ("New MK III Seam Sealing System") eingesetzt.

Bei dieser Maschinenausführung wird das Tape Hotmelt-seitig mit Heißluft angeblasen, aufgeschmolzen und zwischen zwei Andruckrollen (Gummi/Stahl-Paarung) gegen das Substrat gepresst. Die Stahl-Andruckrolle weist mittig eine Hohlkehle zur Führung der abzudeckenden Naht auf.

Bei den Versuchen wurden die in Vorversuchen optimierten Geräteparameter Walzenantriebsgeschwindigkeit (Geräteeinstellung: 5), Heißluftströmungsgeschwindigkeit (Geräteeinstellung: 60 SCFH) und Walzenanpressdruck (Geräteeinstellung: 1,5 bar) nicht verändert.

Als Substrate wurden flammkaschierte Aufbauten Textil/Schnittschaum/Walopur 2102 AK, 35 µm eingesetzt. Die Tapes wurden gegen die Corona-vorbehandelte Seite der Walopur 2102 AK geklebt.

Bei einer Heißlufttemperatur von 265°C wurde die Verbundhaftung von Tapes aus den in den Beispielen und Vergleichsbeispielen beschriebenen Folien in einer Versuchsreihe mit der Walopur 2102 AK (flammkaschierter Aufbau, s.o.) untersucht.

Die Beurteilung der Klebe-/Verbundeigenschaften der Tapes erfolgte anhand von manuellen Abzugstests an den erkalteten Verbunden (24 h nach Verklebung). Für die Bewertung der Klebeeigenschaften wurde die folgende Staffel an beobachteten Phänomenen zugrunde gelegt, die beim langsamen/vorsichtigen Abziehen vom Substrat auftraten:
1. leichte Ablösung von der Basisfolie (schlechte Verklebung)
2. Ablösung von der Basisfolie unter Verformung der Basisfolie
3. Ablösung von der Basisfolie mit gleichzeitiger Ablösung der Basisfolie vom darunterliegenden Schaum (gute Verklebung)

Die beobachteten Ablösungsbilder unterliegen Schwankungen, die teilweise maschinenbedingt sind: zu Beginn des Tape-Prozesses wird das Tape kurzfristig ohne Vortrieb der Andruckwalzen erwärmt, wobei das Hotmelt sicher aufgeschmolzen wird, so daß auf den ersten Zentimetern Verklebungsstrecke auch die besten Verklebungsresultate erhalten werden. Sobald die Tape-Maschine sich in stationärem Betrieb befindet, werden vergleichsweise schlechtere Haftungseigenschaften erzielt. Die Beurteilung erfolgte in Bereichen, in denen von einem stationären Tape-Prozess ausgegangen werden kann.

**Tabelle 2: Klebtechnische Beurteilung der im Rahmen der Beispiele und Vergleichsbeispiele hergestellten Folien**

| Charakterisierung der Verklebung | Einheit | Beispiel A | Beispiel B | Beispiel C | Vergleichsbeispiel 1 | Vergleichsbeispiel 3 |
|---|---|---|---|---|---|---|
| max. Schälkraft | N/15 mm | 16,8 | 15,7 | 17,0 | 17,5 | 3,0 |
| Verklebung gegen Walopur 2102 AK @ / Tapemaschine | Phänomen gemäß o.g.Staffel | 3. | 3./2. | 3. | 3. | 1. |

Die in Tabelle 2 dargestellten Klebversuche zeigen, daß durch die Modifizierung der niedriger erweichenden Schicht mit einem der erfindungsgemäßen Additivkonzentrate die Klebeeigenschaften dieser Hotmeltschicht nicht in einer über die üblichen Schwankungen hinausgehenden Weise beeinträchtigt werden.

## Patentansprüche

1. Mindestens zweischichtige Folie mit mindestens einer bei niedriger Temperatur und mindestens einer bei höherer Temperatur erweichenden Seite, **dadurch gekennzeichnet, dass** die höher erweichende Seite im wesentlichen aus einem thermoplastischen Polyurethan besteht, welches über 100°C auf der Koflerbank erweicht und der Mittelwert des Erweichungsbereiches mindestens 15°C über dem der niedriger erweichenden Schicht liegt und die Matrixkomponente der niedriger erweichenden Seite aus mindestens einem warmklebrigen thermoplastischen Material aus der Gruppe umfassend Polyamide, Polyester und Polyurethane mit einem Mittelwert des Erweichungsbereiches auf der Koflerbank von unter 100°C besteht und der niedriger erweichenden Schicht mindestens eine Zusatzkomponente aus der Gruppe umfassend
a) anorganische Partikel enthaltende Additivkonzentrate,
b) organische Partikel enthaltende Additivkonzentrate
mit thermoplastischen Matrixharzen zugesetzt ist, wobei die zur niedriger erweichenden Schicht zugesetzten Additivkonzentrate Partikel mit einer mittleren Teilchengröße kleiner als 15 µm enthalten. X

2. Folie nach Anspruch 1, **dadurch gekennzeichnet, dass** als Matrixkomponente der Additivkonzentrate thermoplastische Polyurethane eingesetzt werden, die mindestens 15°C oberhalb der niedrigerschmelzenden Polyurethan-Hotmelt-Komponente aufschmelzen.

3. Folie nach Anspruch 1, **dadurch gekennzeichnet, dass** als Matrixkomponente der zur niedriger erweichenden Schicht zugesetzten Additivkonzentrate Polyethylen verwendet wird.

4. Folie nach Anspruch 3, **dadurch gekennzeichnet, dass** als Matrixkomponente der zur niedriger erweichenden Schicht zugesetzten Additivkonzentrate Hochdruck-Polyethylen verwendet wird.

5. Folie nach einem der vorangehenden Ansprüche, **dadurch gekennzeichnet, dass** die der niedriger erweichenden Schicht über ein Additivkonzentrat zugesetzten Partikel Siliziumdioxid enthalten.

6. Folie nach einem der Ansprüche 1 bis 4, **dadurch gekennzeichnet, dass** die der niedriger erweichenden Schicht über ein Additivkonzentrat zugesetzten Partikel Styrol-Polymerisate enthalten.

7. Folie nach einem der vorangehenden Ansprüche, **dadurch gekennzeichnet, dass** die zugesetzten Additivkonzentratkomponenten zum Matrixharz der niedriger erweichenden Schicht in Anteilen zwischen 5 Gew.-% und 40 Gew.-% und besonders bevorzugt zwischen 10 Gew.-% und 20 Gew.-% in der niedriger erweichenden Schicht enthalten sind, jeweils bezogen auf die Gesamtmasse der in der niedriger erweichenden Schicht enthaltenden Rohstoffe.

8. Folie nach einem der vorangehenden Ansprüche, **dadurch gekennzeichnet, dass** sie eine Gesamtdicke zwischen 30 µm und 200 µm hat, wobei die Dicke der höher erweichenden Schicht zwischen 10 µm und 150 µm und die Dicke der niedriger erweichenden Schicht zwischen 10 µm und 150 µm beträgt.

9. Folie nach einem der vorangehenden Ansprüche, **dadurch gekennzeichnet, dass** sie nach einem der thermoplastischen Verarbeitungsverfahren zum Ausformen mehrschichtiger Flächengebilde umfassend Coextrusion, Beschichtung, Transferbeschichtung und Dublierung hergestellt wurde.

10. Verfahren zur Kaschierung oder Abdichtung von porösen Substraten, insbesondere Schaumkunststoffen, textilen Materialien, Nähten, Vliesstoffen, Leder und/oder Spaltleder mit einer mindestens zweischichtigen Folie mit mindestens einer bei niedriger Temperatur und mindestens einer bei höherer Temperatur erweichenden Seite (Dublofolie) gemäß einem der vorangehenden Ansprüche, **dadurch gekennzeichnet, dass** die niedriger erweichende Seite der Folie auf oder über ihren Erweichungsbereich erwärmt wird und die mehrschichtige Folie mit dem Substrat in Verbindung gebracht und verklebt wird, wobei die erweichte Seite mit dem niedrigeren Erweichungsbereich dem Substratzugewandt ist.

## Claims

1. Film comprising at least two layers having at least one side softening at a lower temperature and at least one side softening at a higher temperature, **characterised in that** the higher-softening side substantially consists of a thermoplastic polyurethane which softens at above 100°C on a Kofler hot bench and the median of the softening range is at least 15°C above that of the lower-softening layer and the matrix component of the lower-softening side consists of at least one hot-bonding thermoplastic material from the group comprising polyamides, polyesters and polyurethanes having a median of the softening range on a Kofler hot bench of below 100°C, and at least one additive component from the group comprising
a) additive concentrates containing inorganic particles,
b) additive concentrates containing organic particles
with thermoplastic matrix resins is added to the lower-softening layer, wherein the additive concentrates added to the lower-softening layer contain particles with an average particle size of less than 15 µm.

2. Film according to claim 1, **characterised in that** thermoplastic polyurethanes which melt at least 15°C above the lower-melting polyurethane hot melt component are used as the matrix component of the additive concentrates.

3. Film according to claim 1, **characterised in that** polyethylene is used as the matrix component of the additive concentrates added to the lower-softening layer.

4. Film according to claim 3, **characterised in that** high pressure polyethylene is used as the matrix component of the additive concentrates added to the lower-softening layer.

5. Film according to one of the preceding claims, **characterised in that** the particles added to the lower-softening layer via an additive concentrate contain silicon dioxide.

6. Film according to one of claims 1 to 4, **characterised in that** the particles added to the lower-softening layer via an additive concentrate contain styrene polymers.

7. Film according to one of the preceding claims, **characterised in that** the added additive concentrate components in the matrix resin of the lower-softening layer are contained in the lower-softening layer in proportions of between 5 wt.% and 40 wt.% and particularly preferably between 10 wt.% and 20 wt.%, in each case relative to the total weight of the raw materials contained in the lower-softening layer.

8. Film according to one of the preceding claims, **characterised in that** it has a total thickness of between 30 µm and 200 µm, wherein the thickness of the higher-softening layer is between 10 µm and 150 µm and the thickness of the lower-softening layer is between 10 µm and 150 µm.

9. Film according to one of the preceding claims, **characterised in that** it was produced using one of the methods for processing thermoplastics into multi-layer flat structures comprising coextrusion, coating, transfer coating and lamination.

10. Process for the lamination or sealing of porous substrates, in particular foamed plastics, textile materials, seams, non-woven materials, leather and/or split leather with a film comprising at least two layers with at least one side (double film) softening at a lower temperature and at least one side softening at a higher temperature, according to one of the preceding claims, **characterised in that** the lower-softening side of the film is heated to or above its softening range and the multi-layer film is brought into contact with the substrate and bonded, wherein the softened side with the lower softening range faces towards the substrate.

## Revendications

1. Film à au moins deux couches, présentant au moins un côté ramollissant à température plus basse et au moins un côté ramollissant à température plus élevée, **caractérisé en ce que** le côté à ramollissement plus élevé est constitué essentiellement d'un polyuréthanne thermoplastique qui ramollit au-dessus de 100°C sur le banc Kofler et la valeur moyenne de la plage de ramollissement se situe au moins 15°C au-dessus de celle de la couche à ramollissement plus bas, et le composant de matrice du côté à ramollissement plus bas est constitué d'un matériau thermoplastique collant à chaud du groupe englobant les polyamides, les polyesters et les polyuréthannes, avec une valeur moyenne de la plage de ramollissement sur le banc Kofler inférieure à 100°C, et **en ce qu'**à la couche à ramollissement plus bas est ajouté au moins un composant additionnel du groupe comprenant
a) des concentrés d'additifs renfermant des particules inorganiques,
b) des concentrés d'additifs renfermant des particules organiques,
avec des résines de matrice thermoplastiques, les concentrés d'additifs ajoutés à la couche à ramollissement plus bas renfermant des particules d'une grosseur de grain moyenne inférieure à 15 µm.

2. Film selon la revendication 1, **caractérisé en ce qu'**en guise de composant de matrice des concentrés d'additifs, on utilise des polyuréthannes thermoplastiques, dont le point de fusion se situe au moins 15°C au-dessus de celui du composant de colle à chaud polyuréthanne à fusion plus basse.

3. Film selon la revendication 1, **caractérisé en ce qu'**en guise de composant de matrice des concentrés d'additifs ajoutés à la couche à ramollissement plus bas, on utilise du polyéthylène.

4. Film selon la revendication 3, **caractérisé en ce qu'**en guise de composant de matrice des concentrés d'additifs ajoutés à la couche à ramollissement plus bas, on utilise du polyéthylène haute pression.

5. Film selon l'une des revendications précédentes, **caractérisé en ce que** les particules ajoutées à la couche à ramollissement plus bas par l'intermédiaire d'un concentré d'additifs renferment du dioxyde de silicium.

6. Film selon l'une des revendications 1 à 4, **caractérisé en ce que** les particules ajoutées à la couche à ramollissement plus bas par l'intermédiaire d'un concentré d'additifs renferment des polymères styréniques.

7. Film selon l'une des revendications précédentes, **caractérisé en ce que** les composants de concentrés d'additifs ajoutés à la résine de matrice de la couche à ramollissement plus bas sont contenus selon des proportions entre 5% en poids et 40% en poids, et de façon particulièrement préférée entre 10% en poids et 20% en poids, dans la couche à ramollissement plus bas, en se référant dans chaque cas à la masse totale des substances brutes contenues dans la couche à ramollissement plus bas.

8. Film selon l'une des revendications précédentes, **caractérisé en ce qu'**il possède une épaisseur totale entre 30 µm et 200 µm, l'épaisseur de la couche à ramollissement plus élevé étant comprise entre 10 µm et 150 µm et l'épaisseur de la couche à ramollissement plus bas entre 10 µm et 150 µm.

9. Film selon l'une des revendications précédentes, **caractérisé en ce qu'**il a été fabriqué selon l'un des procédés de traitement thermoplastiques pour le formage d'objets plats à couches multiples, comprenant la coextrusion, le revêtement, le revêtement par transfert et le doublage.

10. Procédé pour assurer le doublage ou l'étanchéité de substrats poreux, notamment de mousses de matière plastique, de matériaux textiles, de joints ou coutures, d'étoffes de non tissé, de cuir et/ou de cuir refendu, avec un film à au moins deux couches présentant au moins un côté ramollissant à température plus basse et au moins un côté ramollissant à température plus élevée (film double) selon l'une des revendications précédentes, **caractérisé en ce que** le côté à ramollissement plus bas du film est chauffé au niveau de sa plage de ramollissement ou au-dessus, et le film à couches multiples est amené en liaison avec le substrat et y est collé, le côté ramolli avec la plage de ramollissement plus basse étant dirigé vers le substrat.
